# EUROPEAN PATENT SPECIFICATION

(11) **EP 1 544 010 B1**
(45) Date of publication and mention of the grant of the patent: **21.01.2009**
(21) Application number: 03104856.4
(22) Date of filing: 19.12.2003
(51) Int. Cl.: B60J 1/04

(54) **Vehicle having a rotatable windshield panel**
Fahrzeug mit einer drehbaren Windschutzscheibe
Véhicule avec un pare-brise pivotant

(43) Date of publication of application: 22.06.2005
(73) Proprietor: Inalfa Roof Systems Group B.V., 5804 AH Venray (NL)
(72) Inventor: Reivers, Petrus, Gerardus, Marie, 5944 BC Arcen (NL); Spronk, Eric, 5691 ZN Son (NL)
(74) Representative: Metman, Karel Johannes

(56) References cited:
- DE-A- 2 246 847
- US-A- 2 089 282
- US-A- 2 319 869
- US-A- 5 738 405
- US-A- 5 833 298
- US-A- 5 938 267
- PATENT ABSTRACTS OF JAPAN vol. 0164, no. 84 (M-1322), 7 October 1992 (1992-10-07) & JP 4 176728 A (TOUYOU SANGIYOU:YUUGEN), 24 June 1992 (1992-06-24)

## Description

The invention relates to a vehicle according to the preamble of claim 1. Vehicles having a body including a roof with reinforcing side beams and a windshield panel with lateral A-beams are very well known. If such a vehicle is fitted with an open roof assembly including a front tiltable panel, then the sealing of the gap between the windshield and the front tiltable panel is very difficult if the car body has a complex curve. The reason is that this necessitates a wide rubber seal to compensate for the different motion patterns across the width of the leading edge of the panel when it is tilted. This wide seal interrupts the clean lines of the roof and it is also hard to maintain a proper function of the seal as it is located in a region with extremely low aerodynamic pressures. A slight leakage of the seal will therefore induce noise into the car interior.

A vehicle according to the preamble of claim 1 is known from US 2,089,282. This document discloses a vehicle having a windshield which can be located in various open positions. Links are provided to hold the windshield in any one of said positions.

US 5,938,267 discloses a vehicle having a mounting arrangement for a windshield including a control linkage for articulating the windshield between a raised position and a lowered position such that the inner side of the windshield faces the vehicle hood when the windshield is in its lowered position.

It is an object of the invention to provide for a vehicle having a tiltable panel to create interior ventilation without the disadvantages of the prior art vehicles.

For this purpose, the vehicle according to the invention is characterised by the features of the characterizing portion of claim 1. Due to this movability of the windshield panel including a front roof portion, there may be created a venting gap on the upper side of the panel as a result of the pivoting movement of the large windshield panel. Due to the large dimension of the windshield panel, only a relatively small pivoting movement is necessary to create a sufficiently large venting gap, and this makes it easy to provide an effective seal at the lower side of the windshield panel. Furthermore, this sealing area can be situated below the level of the bonnet, near the bonnet trailing edge. This area, and thus the seal, is often hardly visible and hidden from large pressure differences, so that the air presure load on the seal is relatively low. The front roof portion acts as a first tiltable panel which does not have the shortcomings of the prior art tiltable panels. It is of course possible to provide one or more movable closure elements in the roof rearwardly of the panel, so that a multiple panel roof is created, which can have several motion patterns.

Preferably, a flexible seal is provided at least between the windshield panel and the A-beams, in order to provide a venting gap only near the upper edge of the windshield panel. This seal may for example be a concertina or fold-up seal.

According to the invention it is possible to provide a cross-beam between the upper ends of the A-beams, said cross-beam provided with at least one of an operating mechanism, interior lighting and rear mirror, and alternatively it is possible to provide a frame around the panel, which supports an operating mechanism for the windshield panel.

The invention will be explained in more detail hereafter with reference to the drawings, which schematically show an exemplary embodiment of the vehicle according to the invention.

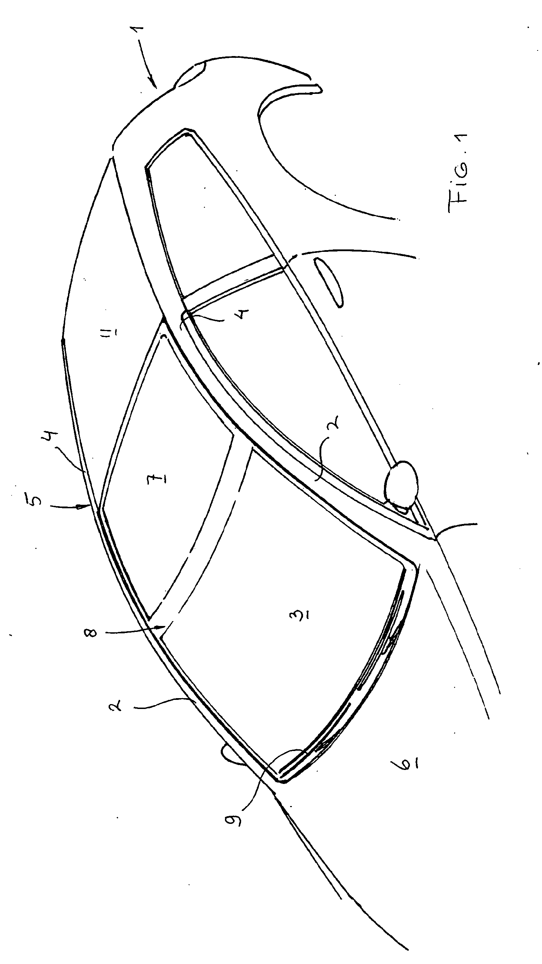

Figs. 1-4 are schematic prospective views of a part of a vehicle body, illustrating different positions of the windshield and roof panels.

The drawings show a part of a vehicle body 1 of a vehicle, which is in this case a passenger car, but may also be another vehicle, such as a truck, caravan or the like. This car body includes an A-beam on each lateral side of the windshield 3 and a roof reinforcing beam 4 on each lateral side of the roof 5. There is a bonnet 6 in front of the windshield 3.

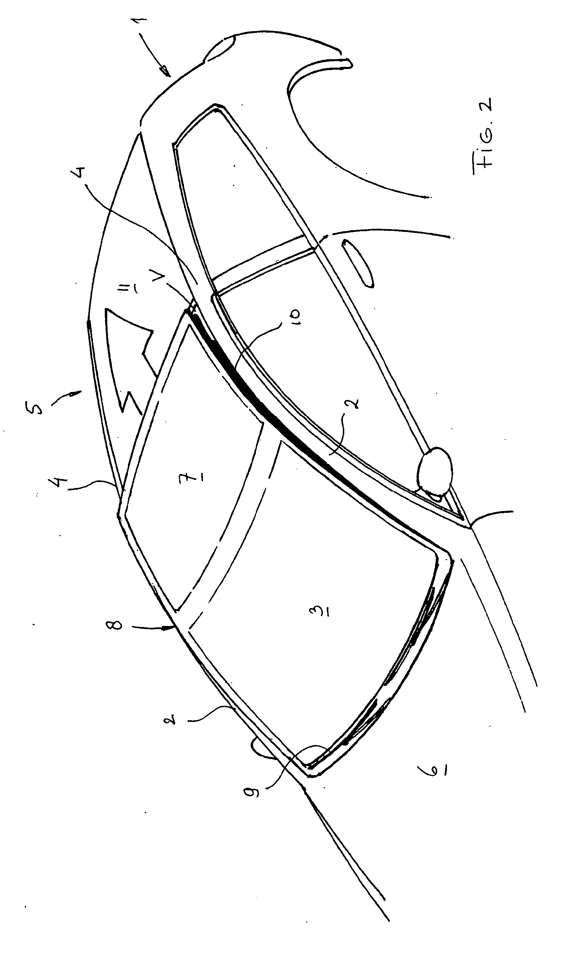

According to the invention, the windshield 3 and a front roof portion 7 together form a large panel 8 which is movable from a closed position (Fig. 1) to an upwardly tilted position as shown in Fig. 2. In this upwardly tilted position there is created a venting gap V in order to vent the interior of the vehicle.

In order to be tiltable, the windshield panel 8 is pivotable around an axis which is positioned near the lower side of the windshield 3 where it meets the rear edge of the bonnet 6. A seal (not shown) seals any gap between the lower front edge of the panel 8 and an adjacent stationary part of the car body 1. This seal lies preferably below the level of the bonnet 6 and is therefore protected from the wind or dynamic pressures. Windshield wipers 9 have been mounted on the panel 8, so that they move together with the windshield panel 8. Windshield panel 8 is made mainly from glass. The front roof panel may be transparent or non-transparent, or something in between.

At the lateral sides of the windshield panel 8 there is provided a flexible seal 10 creating a sealing effect between the windshield panel 8 and the A-beams 2, and preferably also at least partly between the windshield panel 8 and the roof beams 4. Due to this flexible seal 10, only a venting gap near the rear side of the panel 8 is created. This flexible seal 10 may be a concertina seal or other flexible, deformable or movable seal.

In order to effect the movements of the panel 8 there is an operating mechanism which may be supported by a frame (not shown) surrounding the panel 8, or by a cross beam (not shown) between the upper ends of the A-beams 2 or between the roof beams 4. This cross beam may also be used to support other accessories, such as a rear mirror, interior lighting and the like.

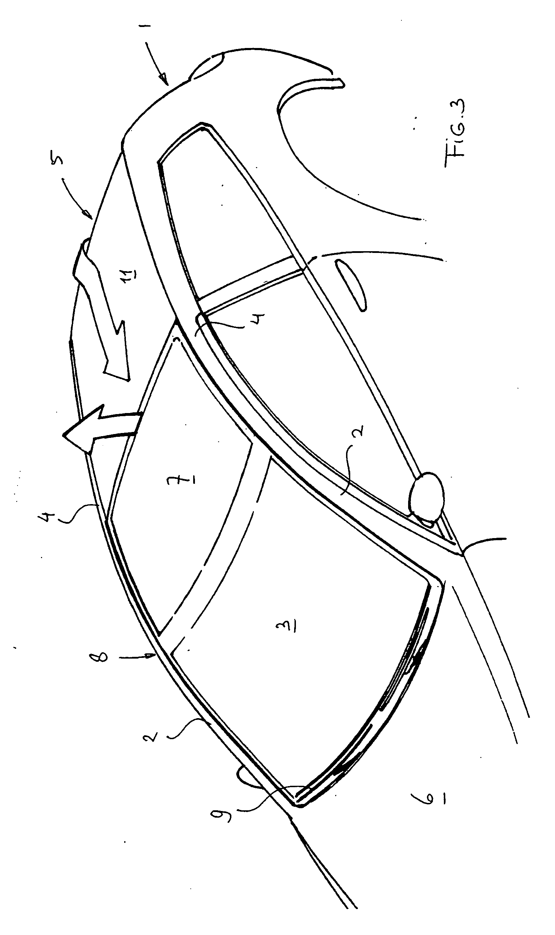

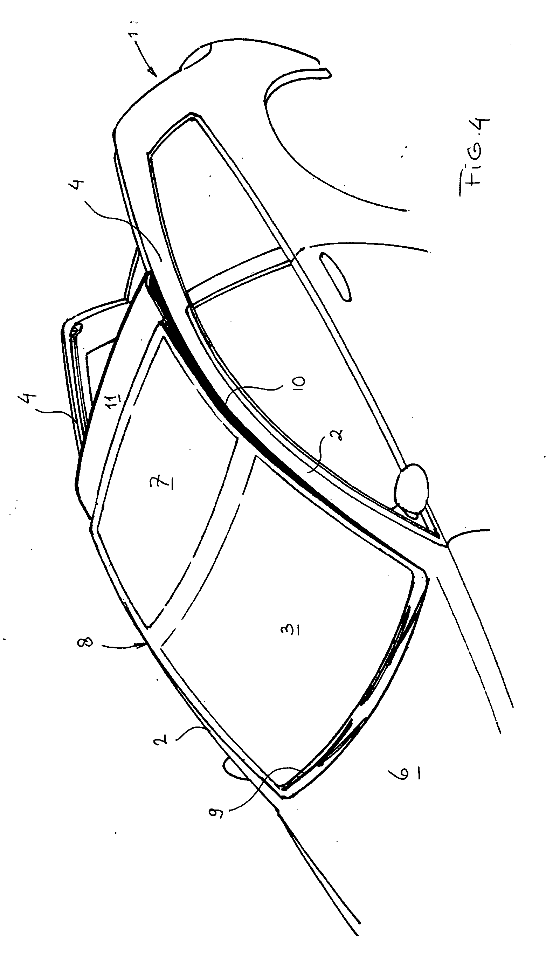

Behind the windshield panel 8 there may be provided one or more closure elements for selectively opening and/or closing portions of the vehicle roof. In the embodiment shown there is mounted a very large roof panel 11 as closure element, said roof panel 11 extending from the rear end of the roof up to the rear edge of the windshield panel 8 when it is in its closed position. With the windshield panel 8 in its upwardly tilted position, it is possible to move the roof panel 11 forwardly below the windshield panel 8, in particular below the front roof portion 7 of the windshield panel 8 (see Figs. 3 and 4). With the rear window down, there is created a very large roof opening, just like a pick up vehicle. Of course all kinds of other closure elements are conceivable, such as a folding cover, a slatted roof, one or more tiltable or slidable panels etc, which may be movable in different ways.

From the foregoing it will be apparent that the invention provides a vehicle which is remarkable for the simple solution to provide a roof structure which creates an advantageous venting gap and opens up further possibilities for mounting closure elements.

The invention is not restricted to the above-described embodiment as shown in the drawing, which can be varied in several ways without departing from the scope of the invention. Thus, the windshield panel may not only be manufactured from glass, but also from transparent plastic, or from glass and metal and/or plastic. Further, the windshield panel may be moved in another way, in addition to or as an alternative to the pivoting movement. Preferably, the windshield panel is made in one piece, but it may also be made with several elements which may be fixedly or movably connected.

## Claims

1. A vehicle having a body (1) including a roof with reinforcing side beams (4), and a windshield panel (8) including a windshield (3) between lateral A-beams (2), wherein the windshield panel (8) is movable between a closed position and an open position in which it is rotated around an axis near the lower side of the windshield panel (8) **characterized in that** the windshield panel (8) is extended into a front portion of the roof, so that this front roof portion (7) is moved together with the windshield (3), and the windshield (3) and the front roof portion (7) form a large panel (8) between the A-beams (2) and the roof side beams (4).

2. A vehicle according to claim 1, wherein the roof is provided with one or more movable closure elements (11) rearwardly of the panel (8).

3. A vehicle according to claim 1 or 2, wherein a flexible seal (10) is provided at least between the windshield panel (8) and the A-beams (2).

4. A vehicle according to any of claims 1 - 3, wherein a cross beam is provided between the upper ends of the A-beams (2), said cross beam being provided with at least one of an operating mechanism, interior lighting and rear mirror.

5. A vehicle according to any of claims 1 - 3, comprising a frame around the windshield panel (8) supporting an operating mechanism for the panel.

6. A vehicle according to any of claims 1 - 5, wherein the panel (8) including the windshield (3) and front roof portion (7) is formed mainly from glass, from transparent plastic, or from glass and metal and/or plastic.

7. A vehicle according to any of claims 1 - 6, comprising a movable closure element (11) between the side beams (4) of the roof, the closure element being positioned rearwardly of the windshield panel (8) in its closed position and being movable to an open position at least in forward direction below the upwardly moved panel (8).

8. A vehicle according to any of the preceding claims, wherein windshield wipers (9) are mounted on the movable windshield panel (8).

## Patentansprüche

1. Fahrzeug mit Fahrzeugaufbau (1), der ein Dach mit Verstärkungs-Seitenträgern (4) und ein Windschutzscheiben-Paneel (8) aufweist, das eine Windschutzscheibe (3) zwischen seitlichen A-Trägern (2) aufweist, wobei das Windschutzscheiben-Paneel (8) zwischen einer Schließ-Position und einer Offen-Position bewegbar ist, in welche es um eine Achse nahe der unteren Seite des Windschutzscheiben-Paneels (8) gedreht wird, **dadurch gekennzeichnet, dass** das Windschutzscheiben-Paneel (8) bis in einen vorderen Abschnitt des Daches verlängert ist, so dass dieser vordere Dachabschnitt (7) zusammen mit der Windschutzscheibe (3) bewegt wird, und die Windschutzscheibe (3) und der vordere Dachabschnitt (7) ein großes Paneel (8) zwischen den A-Trägern (2) und den Dach-Seitenträgern (4) bilden.

2. Fahrzeug gemäß Anspruch 1, wobei das Dach mit einem oder mehreren bewegbaren Schließelementen (11) hinter dem Paneel (8) versehen ist.

3. Fahrzeug gemäß Anspruch 1 oder 2, wobei eine flexible Dichtung (10) zumindest zwischen dem Windschutzscheiben-Paneel (8) und den A-Trägern (2) vorgesehen ist.

4. Fahrzeug gemäß einem der Ansprüche 1 bis 3, wobei ein Querträger zwischen den oberen Enden der A-Träger (2) vorgesehen ist, wobei der Querträger mit mindestens einem von einem Betätigungsmechanismus, einer Innenbeleuchtung und einem Rückspiegel versehen ist.

5. Fahrzeug gemäß einem der Ansprüche 1 bis 3, aufweisend einen Rahmen um das Windschutzscheiben-Paneel (8), der einen Betätigungsmechanismus für das Paneel hält.

6. Fahrzeug gemäß einem der Ansprüche 1 bis 5, wobei das die Windschutzscheibe (3) und den vorderen Dachabschnitt (7) aufweisende Paneel hauptsächlich aus Glas, transparentem Kunststoff oder aus Glas und Metall und/oder Kunststoff geformt ist.

7. Fahrzeug gemäß einem der Ansprüche 1 bis 6, ein bewegbares Schließelement (11) zwischen den Seitenträgern (4) des Daches aufweisend, wobei das Schließelement in seiner Schließ-Position hinter dem Windschutzscheiben-Paneel (8) positioniert ist und in eine Offen-Position zumindest in einer Vorwärtsrichtung unter dem nach oben bewegten Paneel (8) bewegbar ist.

8. Fahrzeug gemäß einem der vorhergehenden Ansprüche, wobei Scheibenwischer (9) an dem bewegbaren Windschutzscheiben-Paneel (8) montiert sind.

## Revendications

1. Véhicule ayant une carrosserie (1) comprenant un toit muni de poutres latérales de renforcement (4) et d'un panneau de pare-brise (8) incluant un pare-brise (3) entre des poutres latérales en A (2), le panneau de pare-brise (8) étant mobile entre une position fermée et une position ouverte dans laquelle il est pivoté autour d'un axe près du côté inférieur du panneau de pare-brise (8), **caractérisé en ce que** le panneau de pare-brise (8) s'étend dans une portion avant du toit, de sorte que cette portion avant de toit (7) soit déplacée avec le pare-brise (3), et que le pare-brise (3) et la portion avant de toit (7) forment un grand panneau (8) entre les poutres en A (2) et les poutres latérales (4) du toit.

2. Véhicule selon la revendication 1, dans lequel le toit est muni d'un ou plusieurs éléments mobiles de fermeture (11) à l'arrière du panneau (8).

3. Véhicule selon la revendication 1 ou 2, dans lequel un joint flexible (10) est placé au moins entre le panneau de pare-brise (8) et les poutres en A (2).

4. Véhicule selon l'une quelconque des revendications 1 à 3, dans lequel une poutre transversale est placée entre les extrémités supérieures des poutres en A (2), ladite poutre transversale étant munie au moins d'un mécanisme de commande, d'un éclairage intérieur et d'un rétroviseur intérieur.

5. Véhicule l'une quelconque des revendications 1 à 3, comprenant un châssis autour du panneau de pare-brise (8) supportant un mécanisme de commande du panneau.

6. Véhicule selon l'une quelconque des revendications 1 à 5, dans lequel le panneau (8) comprenant le pare-brise (3) et la portion avant de toit (7) est constitué principalement de verre, de plastique transparent ou de verre et de métal et/ou de plastique.

7. Véhicule selon l'une quelconque des revendications 1 à 6, comprenant un élément mobile de fermeture (11) entre les poutres latérales (4) du toit, l'élément de fermeture étant positionné à l'arrière du panneau de pare-brise (8) dans sa position fermée et pouvant être déplacé vers une position ouverte au moins vers l'avant sous le panneau (8) déplacé vers le haut.

8. Véhicule selon l'une quelconque des revendications précédentes, dans lequel des essuie-glaces de pare-brise (9) sont montés sur le panneau mobile de pare-brise (8).
